# EUROPEAN PATENT SPECIFICATION

(11) **EP 2 325 767 B1**
(45) Date of publication and mention of the grant of the patent: **04.10.2017**
(21) Application number: 09798099.9
(22) Date of filing: 15.07.2009
(51) Int. Cl.: G06F 9/44, H04N 7/24, G06F 17/22

(54) **DEVICE AND METHOD FOR SCENE PRESENTATION OF STRUCTURED INFORMATION**
VORRICHTUNG UND VERFAHREN ZUR SZENENDARSTELLUNG STRUKTURIERTER INFORMATIONEN
DISPOSITIF ET PROCÉDÉ POUR UNE PRÉSENTATION DE SCÈNE D'INFORMATIONS STRUCTURÉES

(30) Priority: 15.07.2008 US 80749 P; 14.07.2009 KR 20090063980
(43) Date of publication of application: 25.05.2011
(73) Proprietor: Electronics and Telecommunications Research Institute, Daejeon 305-700 (KR)
(72) Inventor: CHA, Jihun, Daejeon 305-700 (KR); LEE, Injae, Daejeon 305-700 (KR); LIM, Young-Kwon, Seoul 152-848 (KR); LEE, Han Kyu, Daejeon 305-700 (KR); HONG, Jin Woo, Daejeon 305-700 (KR)
(74) Representative: Betten & Resch
(86) International application number: PCT/KR2009/003882
(87) International publication number: WO 2010/008196

(56) References cited:
- EP-A2- 1 947 792
- WO-A1-2008/007903
- WO-A1-2008/007903
- WO-A2-2008/104926
- KR-B1- 100 790 191
- BYOUNG-DAI LEE ET AL: "Converged mobile TV services supporting rich media in cellular and DVB-H systems", IEEE TRANSACTIONS ON CONSUMER ELECTRONICS, IEEE SERVICE CENTER, NEW YORK, NY, US, vol. 54, no. 3, 1 August 2008 (2008-08-01) , pages 1091-1097, XP011235552, ISSN: 0098-3063, DOI: 10.1109/TCE.2008.4637592
- JIHUN CHA ET AL: "Proposal for the Presentation of Structured Information", 85. MPEG MEETING; 21-7-2008 - 25-7-2008; HANNOVER; (MOTION PICTURE EXPERT GROUP OR ISO/IEC JTC1/SC29/WG11),, no. M15622, 28 July 2008 (2008-07-28), XP030044219,
- ANONYMOUS: "WD1.0 of ISO/EC 14496-20 LASeR/Amd.3 Presentation of Structured Information", 85. MPEG MEETING;21-7-2008 - 25-7-2008; HANNOVER; (MOTION PICTUREEXPERT GROUP OR ISO/IEC JTC1/SC29/WG11),, no. N10066, 26 July 2008 (2008-07-26), XP030016559, ISSN: 0000-0039
- CYRIL CONCOLATO ET AL: "Comments on LASeR AMD3 (PSI)", 86. MPEG MEETING; 13-10-2008 - 17-10-2008; BUSAN; (MOTION PICTURE EXPERT GROUP OR ISO/IEC JTC1/SC29/WG11),, no. M15792, 9 October 2008 (2008-10-09), XP030044389,
- ANONYMOUS: "Text of ISO/IEC 14496-20:200x/FDIS (1st Ed. + Cor 1 + Amd.1 + Cor. 2)", 82. MPEG MEETING;22-10-2007 - 26-10-2007; SHENZHEN; (MOTION PICTUREEXPERT GROUP OR ISO/IEC JTC1/SC29/WG11),, no. N9385, 22 August 2008 (2008-08-22), XP030015879, ISSN: 0000-0044
- YOUNG-KWON LIM ET AL: "Ad Hoc Group on Scene Representation", 85. MPEG MEETING; 21-7-2008 - 25-7-2008; HANNOVER; (MOTION PICTURE EXPERT GROUP OR ISO/IEC JTC1/SC29/WG11),, no. M15504, 22 July 2008 (2008-07-22), XP030044101,
- ANONYMOUS: "ISO/EC 14496-20 LASeR/PDAM.3 (PSI)", 86. MPEG MEETING;13-10-2008 - 17-10-2008; BUSAN; (MOTION PICTUREEXPERT GROUP OR ISO/IEC JTC1/SC29/WG11),, no. N10253, 30 October 2008 (2008-10-30), XP030016746, ISSN: 0000-0038

## Description

### Technical Field

The present invention relates to a device and method of performing presentation based on access to structured information.

### Background Art

Several approaches to solve a problem related to presentation of structured information have been proposed.

A first approach is a programmatic approach utilizing a script, and a second approach is a declarative approach defining additional information in the presentation.

The programmatic approach may be a very useful tool since the approach provides nearly unlimited methods for accessing the structured information.

However, the programmatic approach has a burden due to the use of a predefined script language and requires, from a contents writer, more than a certain level of knowledge, and thus, producing Lightweight Application Scene Representation (LASeR) content that is utilized for presentation of the structured information may be difficult. Also, the programmatic approach may not generally utilize an advantage of a declarative language, such as LASeR.

Here, the LASeR is a multimedia contents standard appropriate to a low-specification mobile device such as a portable phone, and the like, and a service combining a wireless portal, a mobile TV, a music, a personal service, and the like, may be provided through LASeR contents or an LASeR-based system. Also, a lively dynamic effect, an interactive interface, and the like may be embodied.

Also, the programmatic approach may not utilize the advantages of LASeR being a declarative language.

Accordingly, the declarative approach that maintains the advantages of LASeR may be more effective in performing presentation of the structured information.

An eXtensible Markup Language (XML) has been used in various applications. Accordingly, a method of identifying a fragment of a predefined XML data to enable the identified fragment to be used from a different document is required.

Responding to the above-described needs, the World Wide Web Consortium (W3C) has developed technologies such as Xpointer framework and Xpath language.

Moreover, Moving Picture Experts Group (MPEG) has developed a standard related to the identification of a fragment of resources, as a part of an MPEG-21 framework, by utilizing the above described technologies.

Accordingly, there is a need for a device and method of accessing the structured information based on existing standards, to maintain integrity of standards defined by the MPEG, and to minimize the developing efforts of new solutions.

WO 2008/007903 A1 discloses a method and apparatus for displaying lightweight applications scene representation (LASeR) content. In particular, the apparatus for displaying LASeR content comprises: a parsing unit parsing a LASeR extensible markup language (XML) or a LASeR binary stream; a LASeR document object model (DOM) converting unit converting LASeR scene information of the parsed LASeR binary stream into LASeR scene data in the form of an XML; a LASeR DOM generating unit generating a LASeR DOM based on the parsed LASeR XML or the LASeR scene data in the form of the XML converted in the LASeR DOM converting unit; and a display unit accessing the LASeR DOM using a LASeR application program interface (API) that provides content information included in the LASeR scene data and displaying a LASeR scene.

### Disclosure of Invention

### Technical Goals

An aspect of the present invention may appropriately point to a fragment of the structured information included in a predefined resource, thereby enabling presentation of the structured information even though the structured information is not included in richmedia and the like.

### Technical solutions

The present invention is defined in claim 1. The dependent claims defined embodiments thereof.

### Advantageous effects

According to example embodiments, there may appropriately point to a fragment of the structured information included in a predefined resource, thereby enabling presentation of the structured information even though the structured information is not included in richmedia and the like.

### Brief Description of Drawings

FIG. 1 illustrates an example of structured information according to an embodiment of the present invention;
FIG. 2 illustrates an example where a mpeg-pmsi() scheme is utilized in presentation information, that is, in scene representation data, according to an example;
FIG. 3 illustrates an example where a Lightweight Application Scene Representation (LASeR) externalReference element is utilized in presentation information, that is, in scene representation data, according to an embodiment;
FIG 4 illustrates an example where an xmlUpdate event is utilized in presentation information, that is, in scene representation data; and
FIG. 5 is a diagram illustrating a configuration of a scene presentation device according to an embodiment.

### Best Mode for Carrying Out the Invention

Recently, various structured format standards, such as Moving Picture Experts Group-21 (MPEG-21) Digital Item Declaration (DID), MPEG-7 standard, TV Anytime standard, and Digital Video Broadcasting Convergence of Broadcast and Mobile Services (DVB CBMS) standard, have been developed for representation of metadata with respect to a multimedia presentation.

Preparing suitable contents based on user's environments is an important key for providing multimedia services.

Also, an assumption that metadata is mostly constituted by text information is no longer true.

Recently, a multimedia asset, such as an image, a graphic, a short clip of video or an audio, and the like, has been used for communicating with media customers in a more effective way.

Multimedia service designers have focused their attention on a temporal/spatial configuration of resources, and on an interactive presentation of information based on a user's input.

Therefore, an interactive richmedia is used for providing information with respect to contents and service.

However, the richmedia is not designed to include a great amount of structured information, thus a method using the richmedia including the metadata may be ineffective.

Accordingly, there is need for a method of appropriately performing presentation of the structured information.

Examples disclosed herein may appropriately point to a fragment of the structured information included in a predefined resource, thereby enabling presentation of the structured information even though the structured information is not included in richmedia and the like.

### Examples are described below.

(a) There may be provided a mechanism for accessing the structured information, thereby enabling temporal/spatial expression of the structured information and enabling change of the structured information through a consistent method. In connection with this, a pointer scheme for the structured information is defined to access a specific fragment of the structured information. In this instance, the pointer scheme is referred to as 'mpeg-presentation and modification of structured information (pmsi)() scheme'.
(b) A Scalable Vector Graphics text reference (SVG tref) element is used for referencing contents constituted by texts.
(c) A Lightweight Application Scene Representation (LASeR) externalReferenoe container element for identifying an update of the structured information at predefined time intervals is defined.
(d) An xmlUpdate event for indicating the change of the referenced structured information is defined.

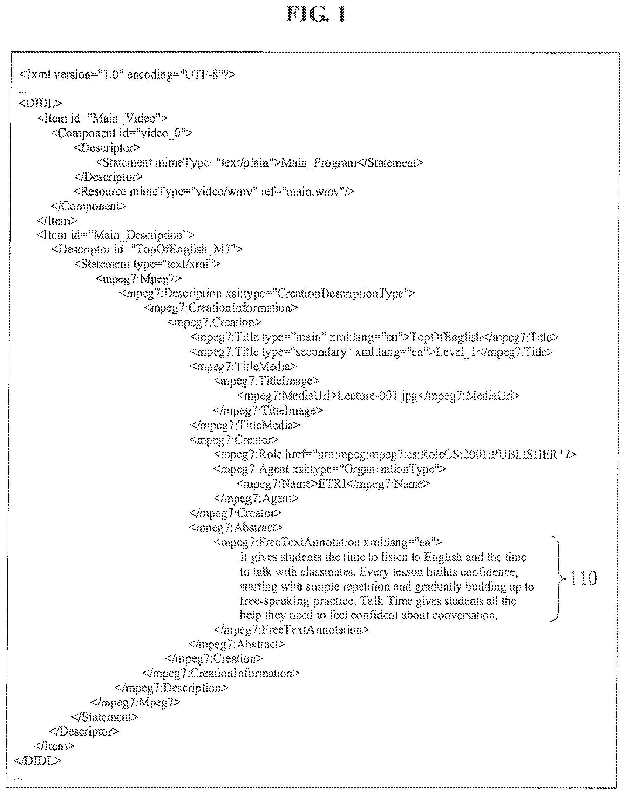

Hereinafter, examples will be described in detail with reference to FIGS. 1 through 4.

### <mpeg-pmsi() scheme>

### (1) mpeg-pmsi() scheme is a scheme as a pointing scheme for fragments of the structured information.

The mpeg-pmsi() scheme is intended to be used together with an XPointer framework, for addressing the fragment of the structured information under the LASeR namespace.

Also, a process for entities addressed by the mpeg-pmsi() scheme may be changed depending on a type of node that uses the mpeg-pmsi() scheme.

### (2) Syntax

The mpeg-pmsi() scheme may be defined as an Extended Backus-Naur Form (EBNF) syntax shown in Table 1 as given below.

**[Table 1]**

| |
|---|
| PointerForStructuredInformation ::= PointerForStructuredInformationSchemeName "(" PointerForStructuredInformationSchemeData ")" |
| PointerForStructuredInformationSchemeName ::= "mpeg-pmsi" |

### (3) Semantics

PointerforStructuredInformationSchemeData in Table 1 is based on a World Wide Web Consortium (W3C) XPath abbreviated syntax.

Also, the mpeg-pmsi() scheme may support an XPath predicate that is used for filtering out a node-set given from undesired nodes.

As an example, Table 2 given below is an expression indicating a ref attribute of the Resource element. Here, the Resource element is a child element of the Component element having a title attribute of 'video_1'.

**[Table 2]**

| |
|---|
| #mpeg-pmsi(Component[@title='video_1']/Resource/@ref)) |

### (4) Example

FIG. 1 illustrates an example of structured information according to an example.

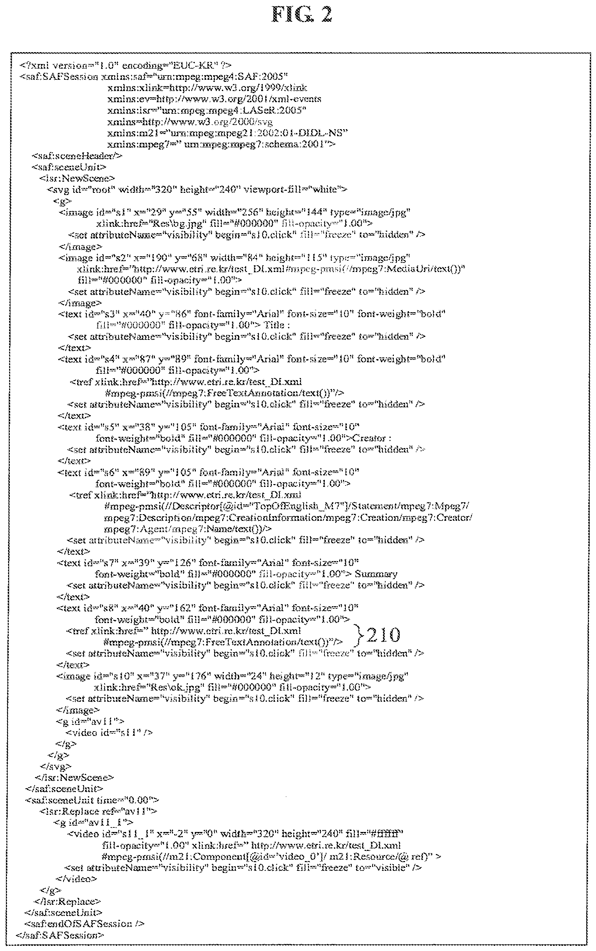

Also, FIG 2 illustrates an example where a mpeg-pmsi() scheme is utilized in presentation information.

With reference to FIG. 2, a fragment 210 represents addressing text information indicated by a fragment 110 among the structured information of FIG. 1.

That is, to read the fragment 110 from the predefined structured information as illustrated in FIG. 1, the fragment 110 may be pointed to by fragment 210 in data including presentation information by using the mpeg-pmsi() scheme as illustrated in FIG 2.

### <SVG tref element>

### (1) Proposal

In general, specific text information existing within XML data is usually referenced, to express the structured information.

Scalable Vector Graphics (SVG) text reference (tref) element having an xlink attribute is required to search for text information from the referenced XML data and the like. Here, the SVG is a language generated based on the XML to represent a two-dimensional (2D) graphic. Also, the tref is used for referring to a text included in the structured information, and the SVG indicates how to represent the text referenced through the tref.

Accordingly, the use of SVG tref element is proposed herein.
The SVG tref element is defined in a sub-clause 10.6 of [W3C SVG11]

### (2) Example

Referring to the fragment 210 of FIG. 2, the SVG tref element is used for enabling data including the presentation information to point to text information indicated by the fragment 110 from the structured information of FIG. 1, by using the mpeg-pmsi() scheme.

That is, when the text information is referenced from the XML data including the structured information, using the SVG tref element of presentation information and the mpeg-pmsi() scheme is disclosed.

### <LASeR externalReference element>

### (1) Proposal

The structured information may be changed according to its feature over time. As an example, an Electronic Service Guide (ESG) expressed by a DVB CBMS may be regularly updated to reflect a change occurring in a schedule of a broadcasted program.

Accordingly, there is a need for a mechanism reflecting the update of the structured information when presentation of the structured information is performed.

In connection with the above, a LASeR externalReference element that is a new container element being capable of identifying the update of the structured information at predefined time intervals, is proposed herein.

The element name and attributes with respect to the LASeR externalReference may be expressed as given in Table 3 below.

**[Table 3]**

| Element name | Attributes |
|---|---|
| externalReference | Id updateInterval security |

### (2) Semantics

The LASeR externalReference element is a container element including all elements that are regularly updated according to an updateInterval attribute.

When the LASeR externalReference element does not include any external reference, the updateInterval attribute may be ignored. Accordingly, the updateInterval attribute is merely used for a Uniform Resource Locator (URL), together with the mpeg-pmsi() scheme. Other URI processing procedure may be performed regardless of the updateInterval attribute.

Also, externalReference element allows children elements.

### (3) Attribute

### (a) lsr:updateInterval

The updateInterval attribute means an update interval of all elements and attributes included in a corresponding element. In this instance, the updateInterval attribute may be one of "none", "free", and "<Clock-value>".

First, when the updateInterval attribute is "none", "none" indicates to evaluate the structured information only once. That is, whether the structured information is updated is not evaluated again.

When updateInterval attribute is "free", the "free" indicates the updateInterval is arbitrary, thus the evaluate the structured information in an arbitrary interval. That is, "free" provides instructions for evaluating the structured information depending on the implementer that embodies a device, at intervals, as opposed to that an author of the presentation that sets the intervals used for evaluating the structured information.

When the updateInterval attribute is "<Clock-value>", "<Clock-value>" indicates to evaluate the structured information at predefined "<Clock-value>" intervals. In this instance, "<Clock-value>" is required to be greater than '0'. That is, when the updateInterval attribute is "<Clock-value>", the author of the presentation may appropriately set the intervals used for evaluating whether the structured information is updated.

### (b) Security

A security attribute controls a type of update allowed in referenced resources. The security attribute is defined in a sub-clause 6.8.53 of ISO/IEC 14496-20.

### (4) Example

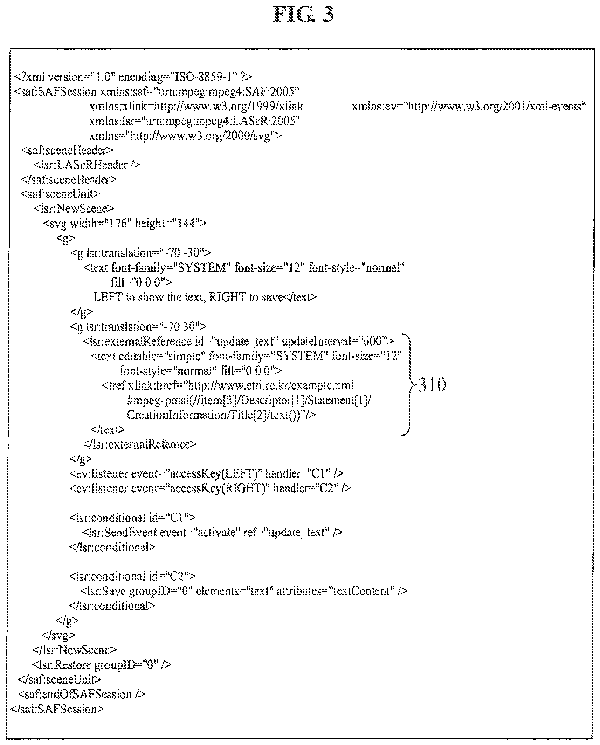

FIG. 3 illustrates an example where a LASeR externalReference element is utilized in presentation information according to an embodiment.

Referring to a fragment 310 of FIG. 3, updateInterval is set to "600", and thus, a scene is updated by evaluating whether structured information, which is referenced based on a mpeg-pmsi() scheme, is updated at the predefined intervals in the present embodiment,

### <xmlUpdate event>

### (1) Proposal

The structured information is not referenced by one specific presentation. As an example, contents of the structured information may be changed to a result of another application.

Accordingly, the structured information is variously referenced, and thus, the structured information may be corrected or changed. Therefore, there is a need for the method of informing that the structured information referenced by a presentation engine is changed.

In connection with the above, the present embodiment discloses an xmlUpdate event where the structured information that is changed is identified.

Details with respect to the xmlUpdate event may be expressed as given in Table 4.

**[Table 4]**

| Event name | Namespace | Description | Bubble | Canc. |
|---|---|---|---|---|
| "xmlUpdate | Um:mpeg:mpeg4:laser:2005 | Informs the update of Structured Information referenced by the presentation engine | No | No |

### (2) Definition of IDL

The xmlUpdate event may be defined as an Interface Definition Language (IDL) shown in Table 5 as given below.

**[Table 5]**

| |
|---|
| Interface xmlUpdateEvent : LASeR Event { |
| readonly attribute DOMString resourceURL ; |
| readonly attribute DOMString updatedValue ; |
| } ; |

### (3) Attribute

### (a) ressourceURL

A resourceURL may identify an updated external resource URL including a mpeg-pmsi() fragment.

### (b) updatedValue

An updatedValue is an updated value pointed by a resource URL.

### (4) Example

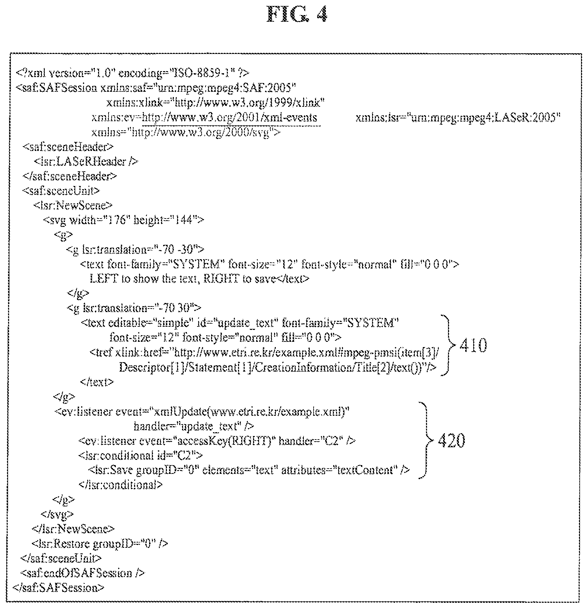

FIG. 4 illustrates an example where an xmlUpdate event is utilized in presentation information, that is, in scene representation data.

A fragment 410 of FIG. 4 shows that structured information of an external resource is referenced using a mpeg-pmsi() scheme.

Referring to a fragment 420, the example determines whether the structured information referenced in the fragment 410 is changed, using the xmlUpdate event, and when the structured information is changed, enables the changed structured information to be referenced again through a handler, thereby performing presentation of a changed scene.

As described above, examples for performing presentation with reference to the structured information of the external resource have been described.

Hereinafter, a scene presentation device that presents a scene by using structured information will be described based on the disclosed examples.

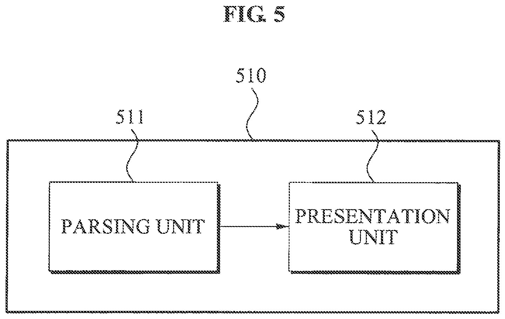

FIG. 5 is a diagram illustrating a configuration of a scene presentation device according to an embodiment.

Referring to FIG. 5, the scene presentation device 510 may include a parsing unit 511 and a presentation unit 512.

The parsing unit 511 parses presentation information addressing structured information. In this instance, the structured information may be metadata specifying what information is to be represented. The structured information may be represented using MPEG-21 Digital Item Declaration (DID) standard, and MPEG-7 standard. Also, the presentation information may be a scene description scheme indicating how to represent the structured information. The presentation information may be represented through a Binary Format for Scenes (BIFS) format and a LASeR format, and also, a LASeR format may be applicable.

The presentation unit 512 reads the structured information based on the parsing result of the presentation information, and presents on a scene.

As described above, the LASeR standard is a multimedia contents standard, and is a defined as a scene description format for representing and delivering a huge capacity media service, such as a rich media, to a device having a limited resource, such as a mobile phone. That is, the LASeR is to perform a service in response to a desire for the huge capacity media service in a scene description level.

A decoder model of a LASeR system may include a decoding buffer, an elementary stream, at least one decoder, and a composition unit. The decoder model may decode the decoding buffer where data coded for each elementary stream is stored, A result of the decoding may be stored in the composition unit.

In this instance, the scene presentation device 510 may correspond to the decoder. Also, the presentation information that addresses the structured information may correspond to the elementary stream of the LASeR. The presentation information may be stored in the decoding buffer.

When single presentation information is inputted, a single scene presentation device 510 may perform parsing of the presentation information, and may read structured information, thereby presenting a scene.

When a grouped plurality of presentation information is inputted, each of a plurality of scene presentation device 510 may perform parsing of each of the grouped plurality of presentation information, and may read structured information, thereby presenting a scene.

Also, when the grouped plurality of presentation information is inputted and the single scene presentation device 510 exists, the scene presentation device 510 may select one of the plurality of presentation information, and may perform parsing of the selected presentation information to read structured information.

In this instance, the presentation information may address the structured information based on a predefined scheme. Accordingly, the presentation unit 512 may access a fragment of the structured information addressed by the presentation information, and may present the fragment in the scene.

In this instance, the scheme may be defined according to the syntax shown in Table 1 as given above.

Also, when the structured information is text information, the presentation information may address the structured information by using an SVG tref element.

As an example, when
<trefxlink:href="http://www.etri.re.kr/test_DI.xml
#mpeg.pmsi(//mpeg7: FreeTextAnnotation/text())"/> is written in the presentation information of FIG. 2, the scene presentation device 510 may refer to http://www.etri.re.kr/test_DI.xml that is structured information by using the SVG tref included in the presentation information. Also, the scene presentation device 510 may address structured information of FIG 1 based on an mpeg-pmsi() scheme in http://www.etri.re.kr/test_DI.xml. The scene presentation device 510 may present a FreeTextAnnotation portion indicated by the mpeg-pmsi() scheme of the structured information in the scene. In this instance, text presented in the FreeTextAnnotation portion may be presented in the scene according to a text representation format defined in the SVG.

Also, the presentation information may include a predefined container element identifying update of the structured information.

In this instance, the predefined container element may be defined as an externalReference element that has an updateInterval attribute related to the interval used for evaluating the update of structured information.

In this instance, the presentation unit 512 may read the updated structured information based on the parsing result of the presentation information and may present an updated scene.

Also, the presentation unit 512 evaluates the structured information a single time, and thereafter no more evaluating is required, when the updateInterval attribute is set to "none". Also, the presentation unit 512 presents the updated scene after evaluating the structured information in arbitrary time interval when the updateInterval attribute is set to "free". Also, the presentation unit 512 evaluates the structured information at "<Clock-value>" period intervals and presents the updated scene when the updateInterval attribute is fixed as "<Clock-value>" being greater than "0".

As an example, as illustrated in FIG 3, when updateInterval is 600, the presentation unit 512 may evaluate the text in item[3]/Descriptor[1]/Statement[1]/CreationInformation/Title[2]/text() presented in the http://www.etri.re.kr/example.xml indicated by the tref with mpeg-pmsi() scheme, at intervals of 600s, and may present the updated scene.

According to an example , when the structured information is changed, the presentation information may include an event used for detecting the change of structured information.

In this instance, the event may be defined as an IDL in Table 5 as given above.

In this instance, the presentation unit 512 may evaluate the structured information based on the parsing result of the presentation information and may read the changed structured information, thereby presenting a changed scene.

The method according to the above-described examples may be recorded in computer-readable media including program instructions to implement various operations embodied by a computer. The media may also include, alone or in combination with the program instructions, data files, data structures, and the like. Examples of computer-readable media include magnetic media such as hard disks, floppy disks, and magnetic tape; optical media such as CD ROM disks and DVDs; magneto-optical media such as optical disks; and hardware devices that are specially configured to store and perform program instructions, such as read-only memory (ROM), random access memory (RAM), flash memory, and the like. Examples of program instructions include both machine code, such as produced by a compiler, and files containing higher level code that may be executed by the computer using an interpreter. The described hardware devices may be configured to act as one or more software modules in order to perform the operations of the above-described examples , or vice versa.

Although a few embodiments of the present invention have been shown and described, the present invention is not limited to the described embodiments. Instead, it would be appreciated by those skilled in the art that changes may be made to these embodiments without departing from the principles of the invention, the scope of which is defined by the claims and their equivalents.

## Claims

1. A scene presentation device (510), the device comprising:
a parsing unit (511) to parse presentation information addressing structured information, the presentation information being represented through a Lightweight Application Scene Representation, LASeR, format; and
a presentation unit (512) to read the structured information based on the parsing result of the presentation information, pointing to a fragment of the structured information addressed by the presentation information, and present the fragment in a scene.
wherein the presentation information indicates how to represent the structured information;
wherein the presentation information includes a predefined container element identifying an update of the structured information, and the presentation unit (512) reads updated structured information based on the parsing result of the presentation information and presents an updated scene; and
wherein the predefined container element includes an updatelnterval attribute that is related to an interval used for evaluating the structured information.

2. The device (510) of claim 1, wherein the presentation information addresses the structured information based on a predefined scheme.

3. The device (510) of claim 2, wherein the scheme is defined according to the syntax shown as given by:
| |
|---|
| PointerForStructuredInformation ::= |
| PointerForStructuredInformationSchemeName "(" |
| PointerForStructuredInformationSchemeData ")" |
| PointerForStructuredInformationSchemeName ::= "mpeg-pmsi" |
wherein the PointerForStructuredInformationSchemeData is based on Xpath abbreviated syntax.

4. The device (510) of claim 3, wherein the presentation information addresses the structured information by using a Scalable Vector Graphics text reference (SVG tref) element, when the structured information is in a text format.

5. The device (510) of claim 1, wherein the presentation unit (512) evaluates the structured information a single time when an attribute of the updatelnterval is "none", presents the updated scene after evaluating the structured information in an arbitrary interval when an attribute of the updatedInterval is "free", and presents the updated scene after evaluating the structured information at "<Clock-value>" period intervals when the attribute of the updatelnterval is fixed as the "<Clock-value>" being greater than "0".

6. The device (510) of claim 1, wherein, when the structured information is changed, the presentation information includes an event for detecting the change of structured information, and the presentation unit (512) reads the changed structured information based on the parsing result of the presentation information, and presents a changed scene.4

7. The device (510) of claim 6, wherein the event is defined as an interface definition language (IDL) as given by:
| |
|---|
| Interface xmlUpdateEvent : LASeR Event { |
| readonly attribute DOMString resourceURL ; |
| readonly attribute DOMString updatedValue ; |
| } ; |
wherein the resouceURL is an attribute of a value for identifying a Uniform Resource Locator (URL) related to the changed structured information, and the updatedValue is an attribute related to a changed value where the URL points to.

## Patentansprüche

1. Eine Szenenpräsentationsvorrichtung (510), wobei die Vorrichtung aufweist:
eine Parsing-Unit (511) zum Parsen von Präsentationsinformationen, die strukturierte Information adressiert, wobei die Präsentationsinformationen repräsentiert werden durch ein Lightweight Application Scene Representation LASeR-Format; und
eine Präsentations-Unit (512) zum Lesen der strukturierten Information basierend auf dem Parsing-Ergebnis der Präsentationsinformationen, zum Zeigen auf ein Fragment der strukturierten Informationen, die durch die Präsentationsinformationen adressiert werden, und zum Präsentieren des Fragments in einer Szene,
wobei die Präsentationsinformationen angeben, wie die strukturierten Informationen repräsentiert werden sollen;
wobei die Präsentationsinformationen ein vordefiniertes Containerelement beinhalten, das ein Update der strukturierten Informationen identifiziert, und wobei die Präsentations-Unit (512) upgedatete strukturierte Informationen liest basierend auf dem Parsing-Ergebnis der Präsentationsinformationen und eine upgedatete Szene präsentiert; und
wobei das vordefinierte Containerelement ein updatelnterval-Attribut einschließt, das sich bezieht auf ein Intervall, dass verwendet wird zum Auswerten der strukturierten Informationen.

2. Die Vorrichtung (510) nach Anspruch 1, wobei die Präsentationsinformationen die strukturierten Informationen basierend auf einem vordefinierten Schema adressieren.

3. Die Vorrichtung (510) nach Anspruch 2, wobei das Schema definiert wird gemäß einer Syntax, die nachfolgend gezeigt wird als gegeben durch:
| |
|---|
| PointeurPourInformationsStructurées ::= |
| PointeurPourNomdeSchémad'InformationsStructurées "(" |
| PointeurPourDonnéesdeSchémad'InformationsStructurées ")" |
| PointeurPourNomdeSchémad'InformationsStructurées ::="mpeg-pmsi" |
wobei das PointerForStructuredInformationSchemeData basiert auf Xpathabgekürzter Syntax.

4. Die Vorrichtung (510) nach Anspruch 3, wobei die Präsentationsinformationen die strukturierten Informationen adressieren unter Verwendung eines Scalable Vector Graphics text reference (SVG tref)-Elements, wenn die strukturierten Informationen in einem Textformat sind.

5. Die Vorrichtung (510) nach Anspruch 1, wobei die Präsentations-Unit (512) die Struktur der strukturierten Informationen ein einzelnes Mal auswertet, wenn ein Attribut des updateInterval gleich "none" ist, die upgedatete Szene nach der Evaluierung der strukturierten Informationen in einem arbiträren Intervall präsentiert, wenn ein Attribut des updateInterval "free" ist, und die upgedatete Szene nach dem Evaluieren der strukturierten Informationen zu "<Clock-value>"-Perioden Intervallen präsentiert, wenn das Attribut von updateInterval festgesetzt ist als der "<Clock-value>" größer als "0".

6. Die Vorrichtung (510) nach Anspruch 1, wobei, wenn die strukturierten Informationen verändert werden, die Präsentationsinformationen ein Event zum Detektieren der Veränderung der strukturierten Informationen einschließen, und die Präsentations-Unit (512) die veränderten strukturierten Informationen basierend auf dem Parsing-Ergebnis der Präsentationsinformationen liest und eine veränderte Szene präsentiert.4

7. Die Vorrichtung (510) nach Anspruch 6, wobei das Event definiert wird als eine interface definition language (IDL) als gegeben durch:
| |
|---|
| EvènementdeMiseàjourxml d'Interface : Evenement LASeR { |
| ressourceURL DOMString d'attribut de lecture uniquement ; |
| Valeurmiseàjour DOMString d'attribut de lecture uniquement ; |
| } ; |
wobei die resourceURL ein Attribut eines Werts zum Identifizieren eines Uniform Resource Locators (URL) ist, der sich bezieht auf die veränderten strukturierten Informationen, und der updatedValue ein Attribut ist, das sich bezieht auf einen veränderten Wert, auf den die URL zeigt.

## Revendications

1. Dispositif de présentation de scène (510), le dispositif comprenant :
une unité d'analyse syntaxique (511) pour analyser syntaxiquement des informations de présentation adressant des informations structurées, les informations de présentation étant représentées par l'intermédiaire d'un format de représentation de scène d'application allégée, LASeR ; et
une unité de présentation (512) pour lire les informations structurées d'après le résultat de l'analyse syntaxique des informations de présentation, indiquant un fragment des informations structurées adressé par les informations de présentation, et présenter le fragment dans une scène ;
dans lequel les informations de présentation indiquent la façon de représenter les informations structurées ;
dans lequel les informations de présentation comportent un élément de contenant prédéfini identifiant une mise à jour des informations structurées, et l'unité de présentation (512) lit des informations structurées mises à jour d'après le résultat d'analyse syntaxique des informations de présentation et présente une scène mise à jour ; et
dans lequel l'élément de contenant prédéfini comporte un attribut d'intervalle de mise à jour qui est lié à un intervalle utilisé pour évaluer les informations structurées.

2. Dispositif (510) selon la revendication 1, dans lequel les informations de présentation adressent les informations structurées d'après un schéma prédéfini.

3. Dispositif (510) selon la revendication 2, dans lequel le schéma est défini selon la syntaxe montrée telle que donnée par :
| |
|---|
| PointeurPourInformationsStructurées ::= |
| PointeurPourNomdeSchémad'InformationsStructurées "(" |
| PointeurPourDonnéesdeSchémad'InformationsStructurées ")" |
| PointeurPourNomdeSchémad'InformationsStructurées ::="mpeg-pmsi" |
dans lequel le PointeurPourDonnéesdeSchémad'InformationsStructurées est basé sur une syntaxe abrégée par Xpath.

4. Dispositif (510) selon la revendication 3, dans lequel les informations de présentation adressent les informations structurées en utilisant un élément de référence de texte de graphiques vectoriels adaptables (SVG tref), lorsque les informations structurées sont sous format texte.

5. Dispositif (510) selon la revendication 1, dans lequel l'unité de présentation (512) évalue les informations structurées une seule fois lorsqu'un attribut de l'intervalle de mise à jour est « aucun », présente la scène mise à jour après évaluation des informations structurées dans un intervalle arbitraire lorsqu'un attribut de l'intervalle mis à jour est « libre », et présente la scène mise à jour après évaluation des informations structurées à des intervalles de période « <valeur-d'horloge> » lorsque l'attribut de l'intervalle de mise à jour est fixé en tant que « <valeur-d'horloge> » supérieure à « 0 ».

6. Dispositif (510) selon la revendication 1, dans lequel, lorsque les informations structurées sont changées, les informations de présentation comportent un évènement pour détecter le changement d'informations structurées, et l'unité de présentation (512) lit les informations structurées changées d'après le résultat d'analyse syntaxique des informations de présentation, et présente une scène changée.

7. Dispositif (510) selon la revendication 6, dans lequel l'évènement est défini en tant que langage de définition d'interface (IDL) tel que donné par :
| |
|---|
| EvènementdeMiseàjourxml d'Interface : Evènement LASeR { |
| ressourceURL DOMString d'attribut de lecture uniquement ; |
| Valeurmiseàjour DOMString d'attribut de lecture uniquement ; |
| } ; |
dans lequel la ressourceURL est un attribut d'une valeur pour identifier un localisateur uniforme de ressources (URL) lié aux informations structurées changées, et la valeur mise à jour est un attribut lié à une valeur changée qu'indique l'URL.
